# FASCICULE DE BREVET EUROPEEN

(11) **EP 1 340 147 B1**
(45) Date de publication et mention de la délivrance du brevet: **01.09.2004**
(21) Numéro de dépôt: 01980633.0
(22) Date de dépôt: 23.10.2001
(51) Int. Cl.: G06F 11/10

(54) **DISPOSITIF ET PROCEDE DE CODAGE POUR UN SOUS-ENSEMBLE DE DETECTION ET CORRECTION D'ERREURS MEMOIRE DANS UN SYSTEME ELECTRONIQUE**
KODIERUNGSVERFAHREN UND VORRICHTUNG IN EINER SPEICHERFEHLERERKENNUNG SOWIE FEHLERKORREKTUR-BAUGRUPPE FÜR EIN ELEKTRONISCHES SYSTEM
CODING DEVICE AND METHOD FOR A STORAGE ERROR DETECTION AND CORRECTION ASSEMBLY IN AN ELECTRONIC SYSTEM

(30) Priorité: 25.10.2000 FR 0013678
(43) Date de publication de la demande: 03.09.2003
(73) Titulaire: CENTRE NATIONAL D'ETUDES SPATIALES, 75001 Paris (FR)
(72) Inventeur: PIGNOL, Michel, F-31000 TOULOUSE (FR)
(74) Mandataire: Poulin, Gérard
(86) Numéro de dépôt international: PCT/FR2001/003286
(87) Numéro de publication internationale: WO 2002/035353

(56) Documents cités:
- WO-A-90/02372
- US-A- 4 604 750

## Description

### Domaine technique

La présente invention concerne un dispositif et un procédé de codage pour un sous-ensemble de détection et correction d'erreurs mémoire dans un système électronique.

### Etat de la technique antérieure

Les circuits électroniques intégrés à bord des véhicules spatiaux peuvent être sensibles à certaines particules générées par le soleil ou à certaines particules existant dans l'espace interstellaire. Ces particules, en traversant ces circuits, y déposent des charges électriques qui peuvent faire changer un bit d'état. De tels événements sont appelés "single event upset" (ou "événements singuliers") ou "soft-error" ; Ils sont transitoires et ne dégradent en rien le composant électronique : une cellule mémoire victime d'un événement singulier subit une erreur de lecture, mais peut être réécrite normalement par la suite.

Plusieurs effets tels que :
- la réduction de la lithographie des technologies des circuits intégrés (0,25 µm aujourd'hui et 0,18 µm prochainement),
- la baisse des tensions d'alimentation (2,2 V aujourd'hui),
peuvent avoir pour conséquence que de telles erreurs se produisent également dans les circuits intégrés utilisés au sol.

En effet, l'énergie par cellule élémentaire diminuant régulièrement (cellules mémoire, registres, etc.), celles-ci peuvent donc être perturbées par des énergies parasites faibles qui étaient sans incidence sur les circuits intégrés de précédentes générations.

L'informatique industrielle se trouve donc confrontée à des phénomènes d'erreurs transitoires engendrées :
- soit par des neutrons d'origine solaire non filtrés par l'atmosphère,
- soit par des particules alpha provenant de la désintégration d'isotopes radioactifs contenus dans les matériaux des boîtiers d'encapsulation des circuits intégrés.

L'élément le plus critique vis-à-vis de ce problème est la logique combinatoire : les erreurs. mémoire peuvent être détectées via des codages (parité ou Hamming par exemple) mais, en ce qui concerne la logique combinatoire, il est impossible de détecter un événement singulier aléatoire sur un noeud quelconque à l'intérieur d'un circuit.

Le problème des événements singuliers devient donc prépondérant pour les fabricants de composants et de systèmes électroniques. Ceux-ci sont donc amenés à intégrer soit dans les circuits intégrés, soit dans les architectures, des mécanismes de protection contre les erreurs dues à ces événements. Une solution envisageable consiste à concevoir des circuits tolérants aux événements singuliers.

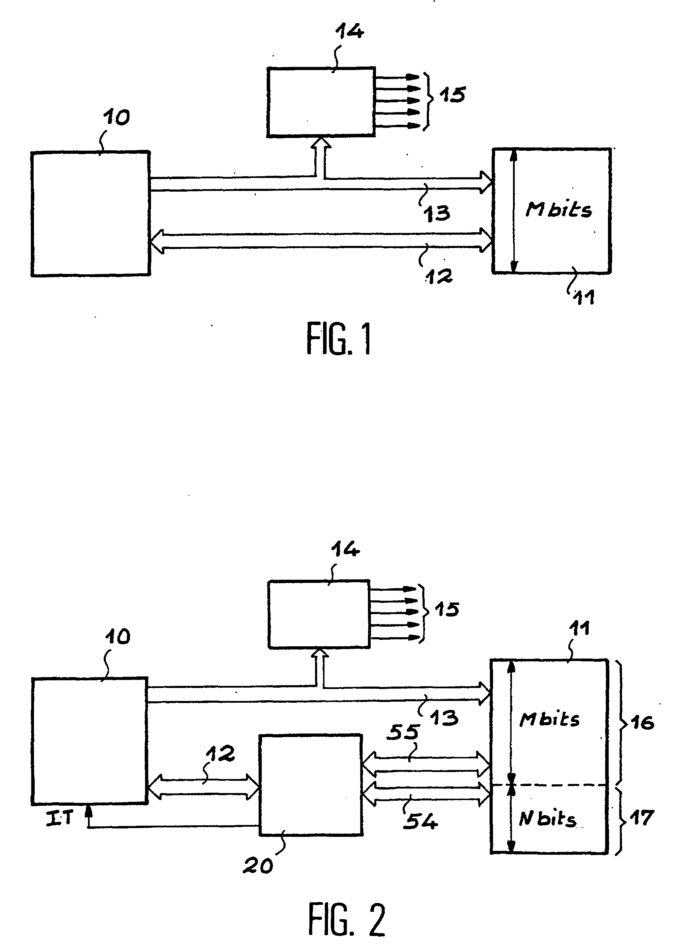

Comme illustré sur la figure 1, un système électronique peut être constitué d'un microprocesseur 10 et de sa mémoire 11 reliés par un bus de données 12 et un bus Adresses+Contrôle 13. Un module de décodage 14 permet d'effectuer la sélection 15 des boîtiers mémoire.

La mémoire 11 peut être protégée par un composant couramment noté EDAC ("Error Détection And Correction"), voire EDC, ECC ou EDCC ("Error Detection/Correction Code"), qui permet de détecter puis de corriger des erreurs engendrées par les événements singuliers dans les cellules de mémorisation, comme décrit dans les documents référencés [1] à [5] en fin de description.

Comme illustré sur la figure 2, l'EDAC 20, où composant de détection et correction d'erreurs mémoire, dans une architecture série, est un composant connecté au bus de données 12, par exemple de M bits de large, mais pas au bus d'adresses 13. L'EDAC 20 est relié à la mémoire 11 par un bus 55 de M bits de large sur lequel transitent les données stockées dans la partie 16 de la mémoire 11, et par un bus 54 de N bits de large sur lequel. transitent les codes stockés dans la partie 17 de la mémoire 11 (à toute donnée est associé un code).

Lors d'une écriture en mémoire 11 par le microprocesseur 10, l'EDAC 20 ajoute aux M bits de la donnée un code de N bits de largeur. La largeur de la mémoire 11 est donc de M+N bits afin de conserver le code associé à chacune des données mémorisées.

Lors d'une lecture en mémoire 11 par le microprocesseur 10, l'EDAC 20 reçoit M+N bits. Il calcule le code correspondant à la donnée de M bits (zone données 16) et le compare au code de N bits (zone codes 17) qui est stocké en mémoire avec la donnée. Si les deux codes ne sont pas identiques, une erreur est alors décrétée. Dans ce cas, et dans l'hypothèse de l'utilisation d'un code de Hamming qui permet de corriger un bit, l'EDAC 20 inverse le bit fautif pour le corriger, présente le mot corrigé sur son bus, et génère une interruption IT au microprocesseur pour que celui-ci réécrive la donnée correcte en mémoire. L'EDAC 20 n'ayant pas connaissance de l'adresse de la donnée, il ne peut effectuer lui-même la correction en mémoire 11.

Le code de parité (N=1) ne permettant que de détecter mais pas de corriger une erreur, on utilise généralement un code de Hamming qui a la capacité de détecter et corriger une erreur dans un mot; et de détecter (sans pouvoir alors les corriger) deux erreurs dans le même mot. La largeur du code de Hamming, et donc l'augmentation de la capacité mémoire nécessaire, dépend de la valeur de M. Par exemple, pour M=16, on a couramment N=6.

Comme décrit dans le document référencé [5], l'EDAC 20 travaille sur le bus de données, et fonctionne en parallèle avec le module de décodage 14 qui travaille sur le bus d'adresses 13. La fonction réalisée par l'EDAC étant plus complexe, le temps de propagation de celui-ci 20 est supérieur à celui du module de décodage 14 et ralentit donc les accès mémoire d'un coeur unité centrale protégé par un tel composant. La capacité des boîtiers mémoires augmentant, le nombre de boîtiers se réduit (notamment dans le domaine embarqué, tels que automobile, aéronautique ou spatial par exemple, qui utilise des petites capacités mémoire). Par conséquent, le module de décodage 14 se simplifie et devient de façon inhérente de plus en plus rapide. Le ralentissement dû à l'EDAC 20 devient donc de plus en plus pénalisant.

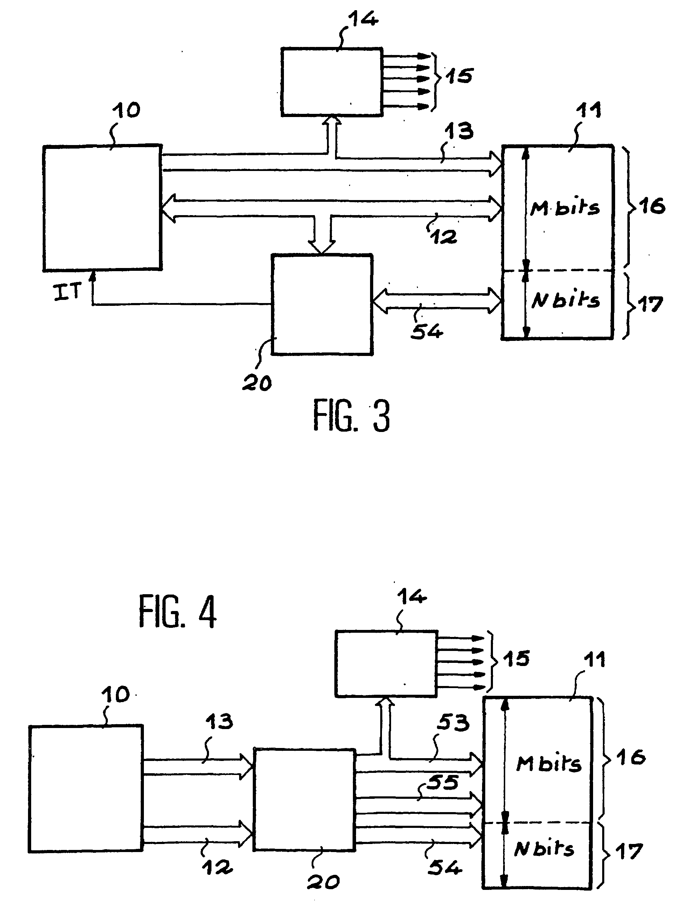

Deux types d'architectures d'EDAC existent :
- L'EDAC dans une architecture série, illustrée sur la figure 2 (ou "flow-through" voire "feed-through"), est un composant inséré sur le bus de données 12 entre le microprocesseur 10 et sa mémoire 11 comme décrit dans les documents référencés [1], [3] et [4] .
- L'EDAC, dans une architecture parallèle illustrée sur la figure 3 (ou "bus-watch") est un composant connecté au bus de données 12 comme un périphérique. Il capture les données et les traite avant de valider l'accès mémoire, comme décrit dans le document référencé [2]. L'EDAC 20 est relié à la mémoire 11 par un bus 54.

L'EDAC 20, qui est un composant très souvent employé dans le domaine spatial, devient de plus en plus pénalisant au fur et à mesure de l'augmentation des fréquences d'horloge des microprocesseurs. Ce composant est d'autant plus critique avec des microprocesseurs à architecture RISC ("Reduced Instruction Set Computer" ou microprocesseur à jeu d'instructions réduit) qui accèdent à la mémoire presque à chaque cycle. Il est nécessaire d'ajouter des cycles d'attente ("wait-states") pour laisser le temps à l'EDAC 20 de fonctionner, sinon il faut ralentir la fréquence de fonctionnement du microprocesseur.

Dans le domaine spatial, les fréquences dès microprocesseurs sont actuellement de l'ordre de quelques dizaines de MHz. Dans le domaine de l'informatique industrielle, ces fréquences sont actuellement d'un ordre de grandeur ou deux plus élevé : Ainsi, des microprocesseurs fonctionnant à 1 GHz commencent à apparaître.

La recherche d'un mode de fonctionnement plus performant de l'EDAC n'introduisant aucun ralentissement est, par conséquent, devenu une nécessité dans le domaine de l'informatique industrielle.

Comme décrit dans le document référencé [6], il est également connu d'utiliser une mémoire cache de 8 mots, associée à un générateur de vecteurs de test, qui permet de traiter de façon plus efficace qu'un EDAC, d'un point de vue temps de propagation, le problème d'adresses mémoire défaillantes suite à une panne définitive de bits isolés. Un tel système ne fonctionne cependant que pour les pannes définitives de quelques bits, ce qui est une configuration peu fréquente. Il n'est pas adapté au traitement des erreurs temporaires de type événements singuliers. Le document référencé [6] précise que ce système doit être associé à un EDAC pour pouvoir les prendre en compte.

Le document US-A-4 604 750 décrit un dispositif de correction d'erreur de type pipeline dans un système ayant une mémoire comprenant à la fois des données utiles, données normales, et des données de type EDAC, ces dernières pouvant être indépendamment accessibles par rapport aux données utiles. Ce document cependant ni ne divulgue ni ne suggère des moyens de codage des données en série sur les accès mémoire qui sont structurés en étages pipeline de façon à avoir le même débit que le composant électronique qui accède à la mémoire.

L'objet de l'invention est de fournir un dispositif et un procédé de codage pour un sous-ensemble de détection et correction d'erreurs mémoire qui permettent de protéger la mémoire sans pénalité en performance sur les temps d'accès, contrairement aux dispositifs de l'art connu.

### Exposé de l'invention

La présente invention concerne un dispositif de codage pour un sous-ensemble de détection et correction d'erreurs mémoire dans un système électronique comprenant un composant électronique et une mémoire, caractérisé en ce que ce dispositif comprend des moyens de codage des données mis en série sur les accès mémoire, et structurés en étages pipeline de façon à avoir le même débit que le composant électronique lorsque celui-ci écrit en mémoire, en particulier pendant les transferts de blocs.

Avantageusement ledit dispositif dispose alors d'une connexion au bus d'adresses, et de moyens de cheminement des adresses comprenant un ensemble de registres pipeline connectés en série dans lesquels est réalisé le transport des adresses capturées, le nombre de ces registres pipeline étant identique au nombre d'étages pipeline des moyens de codage afin que ces adresses se propagent dans le dispositif au même rythme que les mots à coder. Il comprend un comparateur câblé sur chaque registre pipeline des moyens de cheminement des adresses, ces comparateurs permettant une comparaison temps réel entre toutes les adresses qui se trouvent à l'intérieur du dispositif à un moment donné et l'adresse du mot que le composant électronique souhaite lire en mémoire à ce moment là. Dans un mode de réalisation avantageux, il peut comprendre des moyens introduisant des cycles mémoire d'attente au composant électronique lorsque l'un des comparateurs détecte la présence de l'adresse du mot que le composant souhaite lire en mémoire, ces moyens permettant de laisser le temps au mot de se propager dans les derniers étages pipeline du dispositif afin. que celui-ci puisse écrire en mémoire ce mot et son code associé avant que le composant ne les lise. Ou alors, dans un autre mode de réalisation avantageux, il peut comprendre, des moyens de multiplexage permettant lorsque l'un des comparateurs détecte la présence de l'adresse du mot que le composant souhaite lire en mémoire, de fournir ce mot au composant quel que soit l'étage pipeline où il se trouve et d'inhiber les moyens de détection d'erreurs du dispositif sur ce mot puisque son code associé n'a pas eu le temps d'être complètement calculé.

L'invention concerne également un procédé de codage pour un sous-ensemble de détection et correction d'erreurs mémoire dans un système électronique comprenant un composant électronique et une mémoire, caractérisé en ce que les mots que doit écrire le composant électronique en mémoire sont capturés, puis codés avec un code quelconque de détection/correction d'erreur, puis écrits en mémoire ; le codage étant structuré en étages pipeline de façon à avoir le même débit que le composant lorsque celui-ci écrit en mémoire et, ainsi, ne pas le ralentir, en particulier pendant les transferts de blocs.

Avantageusement les adresses sont capturées en même temps que les mots à coder, et ces adresses se propagent à l'intérieur d'étages pipeline au même rythme que les mots à coder. Toutes les adresses présents dans les étages pipeline sont comparées en temps réel à l'adresse du mot que le composant électronique souhaite lire, ceci afin de détecter si le mot recherché par le composant n'a pas été écrit très récemment et ne se trouve pas encore dans ces étages pipeline. Si un mot que le composant électronique souhaite lire en mémoire se trouve encore dans les étages pipeline, on peut introduire des cycles mémoire d'attente au composant électronique pour attendre que se finalise le calcul de code et l'écriture en mémoire de ce mot et de son code associé avant que le composant ne les lise, ou le mot peut être directement fourni au composant en inhibant alors la détection d'erreur sur ce mot puisque son code associé n'a pas eu le temps d'être complètement calculé.

Le procédé de l'invention peut être utilisé dans un système électronique embarqué.

Il peut également être utilisé dans le domaine spatial.

Le dispositif de -l'invention est indépendant du code utilisé pour détecter/corriger les erreurs (parité, Hamming, etc..).

Les réalisations classiques d'EDAC série ou parallèle réduisent la performance du système électronique en augmentant les temps d'accès à la mémoire. Le dispositif de l'invention permet de profiter pleinement des performances du composant électronique (par exemple un microprocesseur) puisque la fonction codage est pipelinée pour offrir le même débit que le composant électronique lui-même, une structure en "mémoire associative" permettant de résoudre les problèmes de non cohérence de la mémoire lors d'accès rapprochés en écriture puis en lecture sur le même mot.

### Brève description des dessins

- La figure 1 illustre un système électronique de l'art connu avec une mémoire non protégée.
- Les figures 2 et 3 illustrent ce système électronique de l'art connu avec une mémoire protégée par un EDAC classique, respectivement dans une architecture série et dans une architecture parallèle.
- La figure 4 illustre ce système électronique, la mémoire étant protégée par un dispositif incluant une fonction de codage de données selon l'invention, seules les phases d'écriture mémoire étant représentées.
- La figure 5 illustre l'architecture interne du dispositif de l'invention (exemple à trois étages pipeline).

### Exposé détaillé de modes de réalisation

La présente invention concerne un dispositif de codage pour un sous-ensemble de détection et correction d'erreurs mémoire dans un système électronique comprenant un composant électronique et une mémoire. Par "composant électronique", on entend un circuit ou un ensemble de circuits intégrés, qui réalise une fonction nécessitant une mémoire, cette fonction pouvant être conçue à partir d'un opérateur ou processeur câblé (voir le document référencé [7] page 20 et page 106), d'un processeur en tranches ("bit slices", voir le document référencé [7] pages 106 à 109), ou d'un microprocesseur par exemple. Dans la suite de la description, on utilise le mot "microprocesseur" car celui-ci est le plus représentatif.

### Moyens de codage

La fonction de codage de données du dispositif de l'invention est basée sur le fait que, pour améliorer la performance des microprocesseurs modernes, ceux-ci intègrent des mémoires caches internes, et les écritures en mémoire externes se font alors la plupart du temps par des transferts de blocs ("flush" ou mode rafale, i.e., une donnée à chaque cycle et ceci de façon continue pour tout le bloc).

Comme illustré sur la figure 4, le dispositif de l'invention incluant la fonction de codage est mis en série sur les accès mémoire du microprocesseur. Son temps de propagation reste en série vis-à-vis du microprocesseur mais ne le ralentit pas grâce à un fonctionnement pipeline. Ce fonctionnement nécessite de connecter le dispositif au bus d'adresses contrairement aux EDACs classiques.

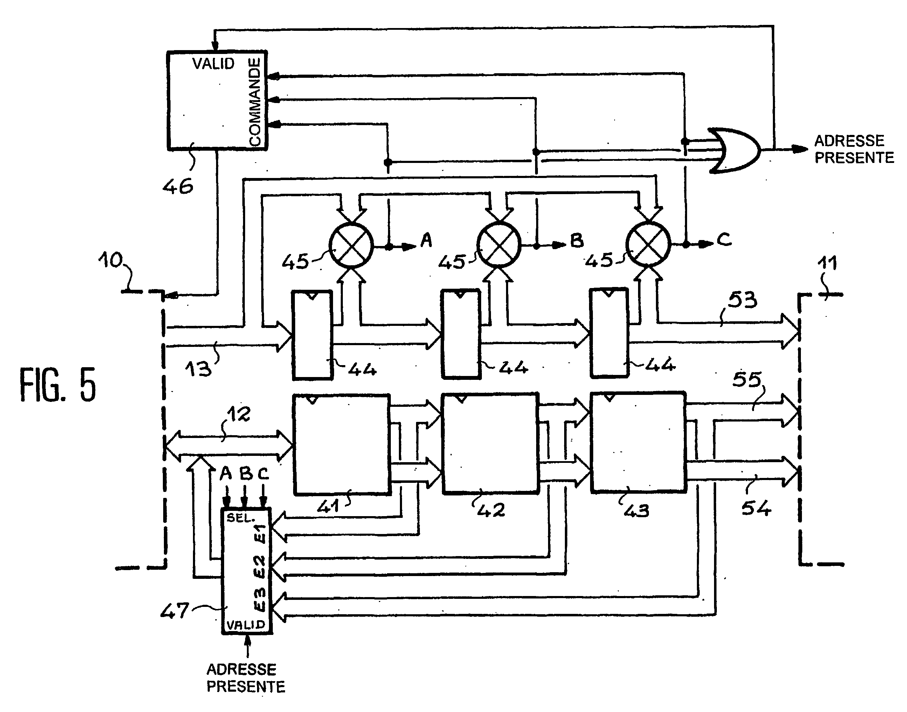

Les moyens de codage du dispositif sont partagés en étages pipeline 41, 42, 43, et utilisent un fonctionnement de type "mémoire associative" comme illustré sur la figure 5.

Si la durée des accès mémoire du microprocesseur est de T, et si le temps de codage du dispositif est inférieur à P fois T, alors la fonction codage est partagée en P étages pipeline 41, 42, 43, chacun ayant un temps de propagation T.

Les mots de données sont chargés dans le premier étage 41 du dispositif au rythme des écritures du microprocesseur, puis ils sont écrits en mémoire par le dispositif avec P cycles de retard mais au même rythme (donc, sans ralentir le microprocesseur).

En parallèle, les adresses associées à chaque donnée sont chargées dans le dispositif et retardées par P simples registres pipeline 44 connectés en série pour rester en phase avec leur donnée.

Si une donnée écrite doit être relue avec un délai inférieur à P cycles mémoire, la mémoire n'est plus en cohérence. Il faut donc que la fonction de codage du dispositif soit structurée comme une mémoire associative, un comparateur 45 câblé sur chaque étage du pipeline des adresses permet de comparer en temps réel ces P adresses à l'adresse du mot que le microprocesseur souhaite lire. Si l'un des comparateurs détecte que la donnée est dans le pipeline du dispositif (signal "adresse présente" activé, ou "adress-hit"), on peut :
- soit introduire, grâce à un générateur de cycles d'attente 46, des cycles mémoire d'attente ("wait-states") au microprocesseur pour laisser le dispositif finaliser son calcul de code, et laisser le microprocesseur accéder à ce mot uniquement une fois qu'il a été écrit en mémoire avec son code associé. L'avantage est alors de banaliser sa nouvelle lecture ;
- soit directement fournir la donnée au microprocesseur grâce à un multiplexage (multiplexeur 47) sur la sortie "donnée" de tous les étages pipeline 41, 42, 43, mais en inhibant alors la détection d'erreur du dispositif sur ce mot puisque le code n'a pas eu le temps d'être complètement calculé. L'avantage est alors le gain en performance.

Etant donné la faible densité des événements singuliers, donc la perte négligeable en performance, la première solution (introduction de cycles d'attente) est préférable.

Le fonctionnement de ces deux solutions (en logique positive) est illustré dans les tableaux 1 et 2 en fin de description.

**Tableau 1**

| Tableau de fonctionnement du générateur de cycles d'attente 46 | | | | |
|---|---|---|---|---|
| Validation | Commande | | | Attente |
| | A | B | C | |
| 0 | 0 | 0 | 0 | 0 cycle |
| 1 | 0 | 0 | 1 | 1 cycle |
| 1 | 0 | 1 | 0 | 2 cycles |
| 1 | 1 | 0 | 0 | 3 cycles |

**Tableau 2**

| Tableau de fonctionnement du multiplexeur 47 | | | | |
|---|---|---|---|---|
| Validation | Sélection | | | Sortie |
| | A | B | C | |
| 0 | 0 | 0 | 0 | Isolée |
| 1 | 0 | 0 | 1 | E3 |
| 1 | 0 | 1 | 0 | E2 |
| 1 | 1 | 0 | 0 | E1 |

### REFERENCES

[1] "29C516E-16 bits flow-through EDAC unit" (document TEMIC Semiconductors, rév. D, 09/12/97).
[2] "29C532E-32 bits bus-watch EDAC unit" (document TEMIC Semiconductors, rév. B, 26/02/97).
[3] "MA31752-16 bits feed-through EDAC unit" (document GEC Plessey Semiconductors, réf. DS3569-2.4).
[4] "MA31755-16 bits feed-through EDAC unit" (document GEC Plessey Semiconductors, réf. DS3572-2.2).
[5] "Two error-detecting and correcting circuits for space applications" de R. Johansson (Proceedings of 26^{th} IEEE Fault Tolerant Computing Symposium, 1996).
[6] "Memory system reliability improvement through associative cache redundancy", de M.A. Lucente, C.H. Harris et R.M. Muir (IEEE Journal of Solid-State Circuits, Vol. 26, n°3, mars 1991).
[7] "Réalisation d'un mini-processeur vectoriel travaillant en arithmétique flottante 32 bits, adapté au traitement fréquentiel d'images" de Michel Pignol (Thèse de docteur ingénieur en électronique présentée à l'université de Clermont II le 12 septembre 1986).

## Revendications

1. Dispositif de codage pour un sous-ensemble de détection et correction d'erreurs mémoire dans un système électronique comprenant un composant électronique (10) et une mémoire (11), **caractérisé en ce que** ce dispositif comprend des moyens de codage des données (20) mis en série sur les accès mémoire, et structurés en étages pipeline de façon à avoir le même débit que le composant électronique lorsque celui-ci écrit en mémoire, en particulier pendant les transferts de blocs.

2. Dispositif selon la revendication 1 disposant d'une connexion, au bus d'adresses, et de moyens de cheminement des adresses, comprenant un ensemble de registres pipeline (44) connectés en série, dans lesquels est réalisé le transport des adresses capturées, le nombre de ces registres pipeline étant identique au nombre d'étages pipeline (41, 42, 43) des moyens de codage (20) afin que ces adresses se propagent dans le dispositif au même rythme que les mots à coder.

3. Dispositif selon la revendication 2 comprenant un comparateur (45) câblé sur chaque registre pipeline (44) des moyens de cheminement des adresses, ces comparateurs (45) permettant une comparaison temps réel entre toutes les adresses qui se trouvent à l'intérieur du dispositif à un moment donné et l'adresse du mot que le composant électronique (10) souhaite lire en mémoire à ce moment là.

4. Dispositif selon la revendication 3, comprenant de moyens (46) introduisant des cycles mémoire d'attente au composant électronique lorsque l'un des comparateurs détecte la présence de l'adresse du mot que le composant (10) souhaite lire en mémoire, ces moyens permettant de laisser le temps au mot de se propager dans les derniers étages pipeline du dispositif afin que celui-ci puisse écrire en mémoire ce mot et son code associé avant que le composant ne les lise.

5. Dispositif selon la revendication 3 comprenant, des moyens de multiplexage (47) permettant lorsque l'un des comparateurs détecte la présence de l'adresse du mot que le composant souhaite lire en mémoire, de fournir ce mot au composant quel que soit l'étage pipeline où il se trouve et d'inhiber les moyens de détection d'erreurs du dispositif sur ce mot puisque son code associé n'a pas eu le temps d'être complètement calculé.

6. Procédé de codage pour un sous-ensemble détection et correction d'erreurs mémoire dans un système électronique comprenant un composant électronique et une mémoire, **caractérisé en ce que** les mots que doit écrire le composant électronique en mémoire sont capturés, puis codés avec un code quelconque de détection/correction d'erreur, puis écrits en mémoire ; le codage étant structuré en étages pipeline de façon à avoir le même débit que le composant lorsque celui-ci écrit en mémoire et, ainsi, ne pas le ralentir, en particulier pendant les transferts de blocs.

7. Procédé selon la revendication 6, qui capture les adresses en même temps que les mots à coder, et dans lequel ces adresses se propagent à l'intérieur d'étages pipeline au même rythme que les mots à coder.

8. Procédé selon la revendication 7, dans lequel toutes les adresses présentes dans les étages pipeline sont comparées en temps réel à l'adresse du mot que le composant électronique souhaite lire, ceci afin de détecter si le mot recherché par le composant n'a pas été écrit très récemment et ne se trouve pas encore dans ces étages pipeline.

9. Procédé selon la revendication 8, dans lequel si un mot que le composant électronique souhaite lire en mémoire se trouve encore dans les étages pipeline, on introduit des cycles mémoire d'attente au composant électronique pour attendre que se finalise le calcul de code et l'écriture en mémoire de ce mot et de son code associé avant que le composant ne les lise.

10. Procédé selon la revendication 8, dans lequel si un mot que le composant électronique souhaite lire en mémoire se trouve encore dans les étapes pipeline, ce mot est directement fourni au composant en inhibant alors la détection d'erreur sur ce mot puisque son code associé n'a pas eu le temps d'être complètement calculé.

11. Procédé selon l'une quelconque des revendications 6 à 10, qui est utilisé dans un système électronique embarqué.

12. Procédé selon l'une quelconque des revendications 6 à 10, qui est utilisé dans le domaine spatial.

## Patentansprüche

1. Codierungsvorrichtung für eine Untereinheit zur Erfassung und Korrektur von Speicherfehlern in einem elektronischen System, das eine elektronische Komponente (10) und einen Speicher (11) umfasst, **dadurch gekennzeichnet, dass** diese Vorrichtung Datencodierungsmittel (20) umfasst, die mit den Speichereingängen in Reihe geschaltet sind und in Pipelinestufen strukturiert sind, derart, dass sie den gleichen Durchsatz wie die elektronische Komponente haben, wenn diese in den Speicher schreibt, insbesondere während der Übertragungen von Blöcken.

2. Vorrichtung nach Anspruch 1, die über einen Anschluss an den Adressenbus und über Adressenlenkungsmittel verfügt, die eine Gesamtheit von in Reihe geschalteten Pipeline-Registern (44) umfassen, in denen der Transport der eingefangenen Adressen erfolgt, wobei die Anzahl dieser Pipeline-Register gleich der Anzahl der Pipelinestufen (41, 42, 43) der Codierungsmittel (20) ist, damit sich diese Adressen in der Vorrichtung im gleichen Takt wie die zu codierenden Wörter ausbreiten.

3. Vorrichtung nach Anspruch 2, die einen festverdrahteten Komparator (45) in jedem Pipeline-Register (44) der Adressenlenkungsmittel umfasst, wobei diese Komparatoren (45) einen Echtzeit-Vergleich zwischen allen Adressen, die sich zu einem gegebenen Zeitpunkt in der Vorrichtung befinden, und der Adresse des Wortes, das die elektronische Komponente (10) zu diesem Zeitpunkt im Speicher lesen soll, ermöglichen.

4. Vorrichtung nach Anspruch 3, die Mittel (46) umfasst, die für die elektronische Komponente Wartespeicherzyklen einführen, wenn einer der Komparatoren das Vorhandensein der Adresse des Wortes erfasst, das die Komponente (10) im Speicher lesen soll, wobei diese Mittel ermöglichen, zu warten, bis sich das Wort in die letzten Pipeline-Stufen der Vorrichtung ausbreitet, damit diese dieses Wort und seinen zugeordneten Code in den Speicher schreiben kann, bevor die Komponente sie liest.

5. Vorrichtung nach Anspruch 3, die Multiplexierungsmittel (47) umfasst, die dann, wenn einer der Komparatoren das Vorhandensein der Adresse des Wortes erfasst, das die Komponente im Speicher lesen soll, ermöglichen, dieses Wort an die Komponente zu liefern, unabhängig davon, in welcher Pipelinestufe es sich befindet, und die Fehlererfassungsmittel der Vorrichtung für dieses Wort zu sperren, weil für seinen zugeordneten Code noch nicht genügend Zeit zur Verfügung stand, vollständig berechnet zu werden.

6. Codierungsverfahren für eine Untereinheit zur Erfassung und Korrektur von Speicherfehlern in einem elektronischen System, das eine elektronische Komponente und einen Speicher umfasst, **dadurch gekennzeichnet, dass** die Wörter, die die elektronische Komponente in den Speicher schreiben soll, eingefangen und dann mit einem beliebigen Fehlererfassungs-/Fehlerkorrekturcode codiert werden und dann in den Speicher geschrieben werden; wobei die Codierung in Pipeline-Stufen strukturiert ist, derart, dass sie den gleichen Durchsatz wie die Komponente hat, wenn diese in den Speicher schreibt, und somit diese nicht verzögert, insbesondere während der Übertragung von Blöcken.

7. Verfahren nach Anspruch 6, bei dem die Adressen gleichzeitig mit den zu codierenden Wörtern eingefangen werden und bei dem diese Adressen sich in den Pipeline-Stufen mit dem gleichen Takt wie die zu codierenden Wörter ausbreiten.

8. Verfahren nach Anspruch 7, bei dem alle Adressen, die in den Pipeline-Stufen vorhanden sind, in Echtzeit mit der Adresse des Wortes verglichen werden, das die elektronische Komponente lesen soll, um festzustellen, ob das von der Komponente gesuchte Wort nicht erst kurz vorher geschrieben worden ist und sich noch in diesen Pipeline-Stufen befindet.

9. Verfahren nach Anspruch 8, bei dem dann, wenn sich ein Wort, das die elektronische Komponente im Speicher lesen soll, noch in den Pipeline-Stufen befindet, Wartespeicherzyklen für die elektronische Komponente eingeführt werden, um abzuwarten, bis die Berechnung des Codes und das Schreiben dieses Worts und seines zugeordneten Codes in den Speicher abgeschlossen sind, bevor sie die Komponente liest.

10. Verfahren nach Anspruch 8, bei dem dann, wenn sich ein Wort, das die elektronische Komponente im Speicher lesen soll, noch in den Pipeline-Stufen befindet, dieses Wort direkt an die Komponente geliefert wird, so dass die Fehlererfassung an diesem Wort gesperrt wird, weil noch nicht genügend Zeit vorhanden war, um seinen zugeordneten Code vollständig berechnen zu können.

11. Verfahren nach einem der Ansprüche 6 bis 10, das in einem bordinternen elektronischen System verwendet wird.

12. Verfahren nach einem der Ansprüche 6 bis 10, das im Gebiet der Raumfahrt verwendet wird.

## Claims

1. Coding device for a subassembly for detecting and correcting, memory errors in an electronic system comprising an electronic component (10) and a memory (11), **characterized in that** this device comprises data coding means (20) placed in series with the memory ports, and structured as pipeline stages so as to have the same bit rate as the electronic component when the latter writes to memory, in particular during the block transfers.

2. Device according to Claim 1 furnished with a connection to the address bus, and with means for forwarding the addresses, comprising an assembly of pipeline registers (44) connected in series, in which the transport of the captured addresses is carried out, the number of these pipeline registers being identical to the number of pipeline stages (41, 42, 43) of the coding means (20) so that these addresses propagate in the device with the same timing as the words to be coded.

3. Device according to Claim 2, comprising a comparator (45) hard-wired to each pipeline register (44) of the means for forwarding the addresses, these comparators (45) allowing real-time comparison between all the addresses that are located inside the device at a given moment and the address of the word that the electronic component (10) wishes to read from memory at that moment.

4. Device according to Claim 3, comprising means (46) introducing memory wait cycles for waiting for the electronic component when one of the comparators detects the presence of the address of the word that the component (10) wishes to read from memory, these means making it possible to allow the word time to propagate in the last pipeline stages of the device so that the latter can write this word and its associated code to memory before the component reads them.

5. Device according to Claim 3 comprising, multiplexing means (47) making it possible when one of the comparators detects the presence of the address of the word that the component wishes to read from memory, to supply this word to the component regardless of the pipeline stage wherein it is located and to disable the means of detecting errors of the device with regard to this word since its associated code has not had time to be calculated completely.

6. Coding method for a subassembly for detecting and correcting memory errors in an electronic system comprising an electronic component and a memory, **characterized in that** the words that the electronic component has to write to memory are captured, then coded with any error detection/correction code, then written to memory; the coding being structured as pipeline stages so as to have the same bit rate as the component when the latter writes to memory and, thus, not slow it down, in particular during the block transfers.

7. Method according to Claim 6, which captures the addresses at the same time as the words to be coded, and in which these addresses propagate inside pipeline stages with the same timing as the words to be coded.

8. Method according to Claim 7, in which all the addresses present in the pipeline stages are compared in real time with the address of the word that the electronic component wishes to read, this being done so as to detect whether the word sought by the component has not been written very recently and is still not located in these pipeline stages.

9. Method according to Claim 8, in which if a word that the electronic component wishes to read from memory is still located in the pipeline stages, memory wait cycles are introduced for waiting for the electronic component so as to wait for the code calculation and the writing of this word and of its associated code to memory to be finalised before the component reads them.

10. Method according to Claim 8, in which if a word that the electronic component wishes to read from memory is still located in the pipeline steps, this word is supplied directly to the component, thus disabling error detection with regard to this word since its associated code has not had time to be calculated completely.

11. Method according to any one of Claims 6 to 10, which is used in an onboard electronic system

12. Method according to any one of Claims 6 to 10, which is used in the field of space.
